# EUROPÄISCHE PATENTSCHRIFT

(11) **EP 3 762 207 B1**
(45) Veröffentlichungstag und Bekanntmachung des Hinweises auf die Patenterteilung: **28.12.2022**
(21) Anmeldenummer: 19709421.2
(22) Anmeldetag: 01.03.2019
(51) Int. Cl.: B29C 48/255, B29C 48/27, B65G 53/56, B65G 53/46, B29C 48/285, B29C 48/25, B29C 31/02, B29C 31/10, B29C 48/025, B29B 7/60

(54) **VORLAGEVORRICHTUNG FÜR DIE VORLAGE VON REZEPTURMATERIAL FÜR EINEN EXTRUSIONSVORGANG IN EINER EXTRUSIONSVORRICHTUNG**
FEED DEVICE FOR FEEDING RECIPE MATERIAL FOR AN EXTRUSION PROCESS IN AN EXTRUSION DEVICE
DISPOSITIF DE PRÉSENTATION POUR LA DISPOSITION PRÉALABLE DE MATÉRIEL DE FORMULATION POUR UN PROCESSUS D'EXTRUSION DANS UN DISPOSITIF D'EXTRUSION

(30) Priorität: 05.03.2018 DE 102018104952
(43) Veröffentlichungstag der Anmeldung: 13.01.2021
(73) Patentinhaber: Windmöller & Hölscher KG, 49525 Lengerich (DE)
(72) Erfinder: MINNERUP, Jens, 49525 Lengerich (DE); KULGEMEYER, Tobias, 49525 Lengerich (DE)
(86) Internationale Anmeldenummer: PCT/EP2019/055110
(87) Internationale Veröffentlichungsnummer: WO 2019/170533

(56) Entgegenhaltungen:
- EP-A1- 1 279 472
- WO-A1-2017/207101
- DE-A1- 4 406 545
- JP-A- S60 112 527

## Beschreibung

Die vorliegende Erfindung betrifft eine Vorlagevorrichtung für die Vorlage von Rezepturmaterial für einen Extrusionsvorgang in einer Extrusionsvorrichtung, ein Verfahren für die Durchführung eines Wechsels von einer Einsatzrezeptur auf eine Folgerezeptur einer Extrusionsvorrichtung und eine Extrusionsvorrichtung für die Herstellung eines Extrusionsproduktes aus einer Rezeptur.

Es ist bekannt, dass Extrusionsvorrichtungen eingesetzt werden, um aus einem Rezepturmaterial ein Extrusionsprodukt herzustellen. Das Rezepturmaterial ist üblicherweise in Granulatform zur Verfügung gestellt, und weist für die Rezeptur eine Vielzahl unterschiedlicher Einzelmaterialien auf. Eine Rezeptur beinhaltet also zumindest zwei oder mehr unterschiedliche Rezepturmaterialien, die hinsichtlich ihrer Art und ihrer quantitativen Menge die jeweilige Rezeptur definieren. Selbstverständlich kann eine Extrusionsvorrichtung auch zwei oder mehr einzelne Extruder aufweisen, um zum Beispiel bei der Herstellung einer Extrusionsfolie zwei oder entsprechend mehr Schichten mit unterschiedlichen Rezepturen zur Verfügung stellen zu können.

Bei den bekannten Lösungen ist insbesondere der Wechsel von einer Einsatzrezeptur, also einer Rezeptur, mit welcher aktuell produziert wird, auf eine Folgerezeptur, also eine Rezeptur, welche nach der Einsatzrezeptur zum Einsatz kommen soll, entscheidend. Dieser Wechsel wird unterschiedlich häufig durchgeführt. Je nachdem mit welchem Produktionsaufwand bzw. mit welcher Produktionsmenge die Einsatzrezeptur gefahren wird, wird bei den bekannten Lösungen üblicherweise zwei- bis zehnmal am Tag ein Wechsel von einer Einsatzrezeptur auf eine Folgerezeptur erfolgen.

Nachteilhaft bei den bekannten Lösungen ist es, dass der Aufwand für den Wechsel relativ hoch ist. So sind grundsätzlich zwei Systeme bekannt. Zum einen handelt es sich dabei um Silovorlagen, aus welchen über entsprechende Anschlussschnittstellen das in den Silos gelagerte Einsatzmaterial in einen Vorlagebehälter eingesaugt werden kann. Bei kleineren Anlagen bzw. bei Anlagen mit einer größeren Anzahl von unterschiedlichen einzelnen Rezepturmaterialien sind auch Säcke bzw. Container bekannt, in welche Sauglanzen als Einsatzschnittstelle bzw. Folgeschnittstelle eingesteckt werden. Ist nun der Wechsel der Rezeptur gewünscht, so muss eine Einsatzschnittstelle von ihrer Einsatzposition in eine Folgeposition bewegt werden, also zum Beispiel die entsprechende Lanze der Einsatzschnittstelle aus dem zugehörigen Behälter herausgezogen und in den entsprechenden Behälter mit dem Folgematerial eingesteckt werden. Weist eine Rezeptur zwei oder deutlich mehr Komponenten auf, welche alle für den Rezepturwechsel gewechselt werden müssen, so muss der beschriebene Vorgang nicht nur einmalig, sondern für jede einzelne zu wechselnde Rezepturkomponente durchgeführt werden. Beachtet man nunmehr noch, dass es sich hierbei um den Wechsel der Rezeptur für einen Extruder der Extrusionsvorrichtung handelt, und bedenkt dabei weiter, dass komplexe Extrusionsfolien auch fünf oder zehn oder sogar noch mehr Schichten aufweisen können, so ergibt sich eine Vielzahl von Wechselanforderungen, und damit eine Vielzahl von manuellen Tätigkeiten, um die jeweilige Einsatzschnittstelle auf die Folgeschnittstelle umzustecken. Bei den bekannten Lösungen ist pro Wechsel üblicherweise von einer manuellen Wechselanforderung für die einzelnen Einsatzschnittstellen zu den Folgeschnittstellen von den Einsatzmaterialien zu den Folgematerialien von mindestens zehn Stück auszugehen. Dies führt dazu, dass ein sequenzielles Arbeiten bei diesem manuellen Wechsel einen hohen Zeitaufwand mit sich bringt. Da üblicherweise in der Zwischenzeit die Extrusionsvorrichtung weiterläuft, führt dies zu einem relativ hohen Zeitaufwand, in welchem die Maschine unproduktiv ist und darüber hinaus sogar Ausschussmaterial erzeugt. Durch das bekannte sequenzielle Wechseln der einzelnen Einsatzschnittstellen wird darüber hinaus ständig eine neue und falsche Rezepturmischung während des Wechsels zur Verfügung gestellt, so dass der Zeitaufwand, bis zu welchem sich anschließend in der Extrusionsvorrichtung die finale und gewünschte Folgerezeptur einstellt, ebenfalls vergrößert wird.

Leitungssysteme für Kunststoffgranulat sind ferner aus den Dokumenten WO 2017/207101 A1, EP 1 279 472 A1 sowie DE 44 06 545 A1 bekannt. Aus dem Dokument JP S60 112527 A ist ein Umschaltmechanismus für ein Leitungssystem bekannt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Umstellung der Rezeptur zu beschleunigen.

Die voranstehende Aufgabe wird gelöst durch eine Vorlagevorrichtung mit den Merkmalen des Anspruchs 1, ein Verfahren mit den Merkmalen des Anspruchs 7 sowie eine Extrusionsvorrichtung mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorlagevorrichtung beschrieben sind, selbstverständlich auch im Zusammenhang mit dem erfindungsgemäßen Verfahren sowie der erfindungsgemäßen Extrusionsvorrichtung und jeweils umgekehrt, so dass bezüglich der Offenbarung zu den einzelnen Erfindungsaspekten stets wechselseitig Bezug genommen wird bzw. werden kann. Erfindungsgemäß wird nun eine Vorlagevorrichtung für die Vorlage von Rezepturmaterial für einen Extrusionsvorgang in einer Extrusionsvorrichtung vorgesehen. Eine solche Vorlagevorrichtung weist eine Einsatzschnittstelle zur Ansaugung von Einsatzmaterial auf. Weiter ist eine Folgeschnittstelle zur Ansaugung von Folgematerial vorgesehen. Darüber hinaus ist die Vorlagevorrichtung mit einem Vorlagebehälter ausgestattet zur Aufnahme von angesaugtem Einsatzmaterial und von angesaugtem Folgematerial. Dabei ist der Vorlagebehälter über eine Ansaugleitung mit einem Ausgang einer Weichenvorrichtung verbunden. Diese Weichenvorrichtung ist weiter mit einem Einsatzeingang über eine Einsatzleitung mit der Einsatzschnittstelle verbunden und darüber hinaus mit einem Folgeeingang über eine Folgeleitung mit der Folgeschnittstelle verbunden. Die Weichenvorrichtung selbst weist einen Stellabschnitt auf, welcher zwischen einer Einsatzposition, in welcher der Einsatzeingang mit dem Ausgang verbunden ist, und einer Folgeposition, in welcher der Folgeeingang mit dem Ausgang verbunden ist, verstellbar ist.

Es ist ferner vorgesehen, dass der Stellabschnitt zusätzlich in eine Leersaugposition verstellbar ist, in welcher der Ausgang mit einem zur Umgebung offenen Leersaugeingang verbunden ist, und/oder dass die Einsatzschnittstelle und/oder die Folgeschnittstelle eine verschließbare Leersaugöffnung aufweisen

Eine erfindungsgemäße Vorlagevorrichtung ist in einer Extrusionsvorrichtung nun zur Verfügung gestellt, um zumindest ein Rezepturmaterial einer Rezeptur zu verändern. Selbstverständlich kann bei komplexen Rezepturen die Vorlagevorrichtung auch deutlich häufiger, insbesondere bei allen Rezepturbestandteilen, vorgesehen sein. Der entscheidende Gesichtspunkt beruht dabei auf zwei Merkmalen, wie sie auch in Anspruch 1 aufgeführt sind. Dabei handelt es sich zum einen darum, dass neben der Einsatzschnittstelle auch eine Folgeschnittstelle vorhanden ist. Damit wird es möglich, bereits während der Produktion der Einsatzrezeptur mit dem Einsatzmaterial die zugehörige Folgeschnittstelle mit einer Quelle für das Folgematerial zu verbinden. Ist die Folgeschnittstelle und auch die Einsatzschnittstelle zum Beispiel als Sauglanze ausgebildet, so kann während der laufenden Produktion der Einsatzrezeptur die Folgeschnittstelle in eine entsprechende Quelle, zum Beispiel einen Container oder einen Sack mit dem Folgematerial, eingesteckt werden. Die Zeit, welche für dieses Einstecken der Folgeschnittstelle benötigt wird, läuft dabei parallel zu dem noch laufenden Produktionsvorgang mit dem Einsatzmaterial. Während des Einsteckens der Folgeschnittstelle in die Quelle mit Folgematerial wird also kein Produktionsstopp und auch keine Produktion von Ausschuss notwendig.

Der zweite Kerngedanke ist das Umschalten zwischen dem Einsatzmaterial und dem Folgematerial. Während das Verwenden einer zusätzlichen Schnittstelle in Form der Folgeschnittstelle es erlaubt, den Wechsel sozusagen manuell vorzubereiten, kann mithilfe der Weichenvorrichtung das Umschalten von der Einsatzrezeptur auf die Folgerezeptur und im Besonderen vom Einsatzmaterial auf das Folgematerial durch ein einfaches Verstellen des Stellabschnitts zur Verfügung gestellt werden. Werden beispielsweise beim Wechsel von einer Einsatzrezeptur auf eine Folgerezeptur zwei oder auch mehr Einsatzmaterialien auf Folgematerialien gewechselt, so wurden all diese Wechselschritte durch die entsprechende Anordnung der Folgeschnittstellen an einer Quelle zum jeweiligen Folgematerial vorbereitet. Der Wechsel kann nun gleichzeitig, im Wesentlichen gleichzeitig oder in kurzen Zeitabständen sequenziell hintereinander dadurch durchgeführt werden, dass bei der jeweiligen Wechselvorrichtung der Stellabschnitt aus der Einsatzposition in die Folgeposition verstellt wird.

Dabei ist im erfindungsgemäßen Kerngedanken zuerst einmal unerheblich, ob das Verstellen des Stellabschnitts von der Einsatzposition in die Folgeposition ein manuelles Verstellen oder ein automatisches bzw. teilautomatisch Verstellen darstellt. Auch wenn durch einen hohen Automatisierungsgrad weitere Vorteile erzielt werden können, wird bereits durch das zeitlich parallele Arbeiten in der Vorbereitung der Folgeschnittstellen mit dem Bezug zu der Quelle an Folgematerial der größte Zeitgewinn erzielt. Dabei kann dieser Zeitgewinn auch dann beibehalten werden, wenn bei den einzelnen Wechselvorrichtungen eine manuelle Bedienung das Umschalten des Stellabschnitts gewährleistet.

Sobald der Rezepturwechsel von der Einsatzrezeptur zur Folgerezeptur beendet worden ist, handelt es sich bei der nun laufende Rezeptur wieder um die Einsatzrezeptur. Ein weiterer Folgeauftrag mit einer entsprechenden Folgerezeptur kann in gleicher Weise nachgefolgt werden und in beliebiger Weise skaliert werden. Die Folgerezeptur wird also nach Produktionsbeginn mit dieser Folgerezeptur für alle nachfolgenden Wechselvorgänge wieder zur Einsatzrezeptur. Gleiches gilt für die einzelnen Rezepturmaterialien. Sobald der Wechsel von einem Einsatzmaterial das Folgematerial erreicht worden ist, befindet sich die Extrusionsvorrichtung nun in der Produktion mit der Folgerezeptur. Dadurch, dass die Folgerezeptur damit von der Begrifflichkeit zur Einsatzrezeptur wechselt, gilt Selbes auch für das Folgematerial, welches nach dem Wechsel selbst als Einsatzmaterial bezeichnet werden kann. Anschließend kann ein folgender Materialwechsel bzw. Rezepturwechsel in gleicher Weise vorbereitet und abschließend auch durchgeführt werden.

Die Bewegung von dem jeweiligen Einsatzmaterial bzw. Folgematerial in den Vorlagebehälter ist dabei für die Funktionsweise der vorliegenden Erfindung unerheblich. Bevorzugt ist es jedoch, wenn mittels eines Unterdrucks im Vorlagebehälter eine Ansaugung der entsprechenden Materialien erfolgen kann.

Die einzelnen Leitungen, also insbesondere die Ansaugleitung, die Folgeleitung und die Einsatzleitung sind dabei insbesondere schlauchartig, vorzugsweise als druckstabile Schläuche ausgeführt. Die beschriebenen Verbindungen, welche über die Leitungen zur Verfügung gestellt werden, sind für den Transport des jeweiligen Rezepturmaterials ausgelegt. Die Weichenvorrichtung ist dabei Teil der Vorlagevorrichtung und kann sowohl im Bereich des Vorlagebehälters als auch im Bereich der Einsatzschnittstelle bzw. der Folgeschnittstelle oder separat von diesen Bauteilen angeordnet sein.

Es ist von Vorteil, wenn bei einer erfindungsgemäßen Vorlagevorrichtung der Stellabschnitt zusätzlich in eine Leersaugposition verstellbar ist, in welcher der Ausgang mit einem zur Umgebung offenen Leersaugeingang verbunden ist. Wie später noch mit Bezug auf das erfindungsgemäße Verfahren erläutert wird, kann auf diese Weise ein zusätzlicher Schritt beim Rezepturwechsel durchgeführt werden. So ist es möglich, noch vor dem Umschalten in die Folgeposition mit dem Stellabschnitt diesen in die Leersaugposition zu bringen. In dieser Leersaugposition kann nun Luft von der Umgebung, insbesondere durch den offenen Leersaugeingang eingebracht werden. Rezepturmaterial bzw. in diesem Fall Einsatzmaterial, welches sich noch in der Ansaugleitung befindet, kann auf diese Weise in den Vorlagebehälter eingespült werden. Nach dem Umschalten in die Folgeposition wird also das Folgematerial in eine leere Ansaugleitung eingesaugt, so dass eine unerwünschte Vermischung zwischen dem Einsatzmaterial und dem Folgematerial noch weiter reduziert oder sogar gänzlich vermieden werden kann. Auch werden auf diese Weise der produzierte Ausschuss und die notwendige Materialmenge an Einsatzmaterial für die Durchführung des Wechsels reduziert.

Weitere Vorteile bringt es mit sich, wenn eine erfindungsgemäße Vorlagevorrichtung derart ausgestaltet ist, dass die Einsatzschnittstelle und/oder die Folgeschnittstelle als Sauglanze ausgebildet sind. Dies führt zu einer besonders einfachen und kostengünstigen Ausgestaltungsform. Selbstverständlich kann alternativ oder auch in Kombination zu Sauglanzen auch eine entsprechende Anschlussvorrichtung an eine Silolagerung zur Verfügung gestellt gestellt sein. Die Verwendung von Sauglanzen bringt jedoch eine hohe Flexibilität bei einer Vielzahl von unterschiedlichen Lagerungsmöglichkeiten mit sich, und darüber hinaus auch eine einfache manuelle Bedienbarkeit für den Benutzer einer erfindungsgemäßen Vorlagevorrichtung.

Darüber hinaus ist es von Vorteil, wenn bei einer erfindungsgemäßen Vorlagevorrichtung die Ansaugleitung kürzer ist, als die Einsatzleitung und/oder die Folgeleitung, insbesondere kürzer als die Hälfte der Einsatzleitung und/oder die Hälfte der Folgeleitung. Diese Variante ist insbesondere kombiniert mit der bereits erläuterten Leersaugposition und einem entsprechenden Leersaugeingang. Dies führt nun dazu, dass Material, welches sich in der Ansaugleitung befindet, vollständig in den Vorlagebehälter eingesaugt werden kann. Material, welches auf der gegenüberliegenden Seite noch in der Einsatzleitung bzw. der Folgeleitung angeordnet ist, verbleibt dort und wird zumindest teilweise als Ausschuss entfernt. Die Reduktion der Länge der Einsatzleitung und der Folgeleitung im Verhältnis zur Länge der Ansaugleitung führt nun dazu, dass diese Menge an Ausschuss reduziert werden kann, was zum einen umweltfreundlich und zum anderen kostengünstig ist.

Ein weiterer Vorteil wird erzielt, wenn bei einer erfindungsgemäßen Vorlagevorrichtung die Einsatzschnittstelle und/oder die Folgeschnittstelle eine verschließbare Leersaugöffnung aufweisen. Das bedeutet, dass ein Kontakt bzw. ein Öffnen zur Umgebung nicht nur in der Weichenvorrichtung, sondern auch direkt an der jeweiligen Schnittstelle möglich wird. Wie bereits mit Bezug auf ein Leersaugen der Ansaugleitung erläutert worden ist, kann mit einer entsprechenden Ventilöffnung mithilfe der Leersaugöffnung nun auch die Einsatzleitung und/oder die Folgeleitung komplett in Richtung des Vorlagebehälters leergesaugt werden. Damit werden die unerwünschte Vermischung und auch der unerwünschte hohe Ausschuss durch verbleibendes Material in der Einsatzleitung und/oder in der Folgeleitung reduziert oder sogar gänzlich vermieden. In einem ersten Schritt bleibt dabei unerheblich, ob diese Leersaugöffnung einen manuellen und/oder einen automatischen Verschluss aufweist.

Bei der Ausführungsform gemäß dem voranstehenden Absatz bringt es Vorteile mit sich, wenn bei der erfindungsgemäßen Vorlagevorrichtung die Leersaugöffnung einen Verschluss aufweist, welcher in Öffnungsrichtung federbelastet und/oder mit einem motorischen Antrieb in eine Öffnungsposition bringbar ist. Damit wird durch den motorischen Antrieb eine automatisierte und mithilfe der Federbelastung eine teilautomatisierte Bewegung dieses Verschlusses möglich. Insbesondere, wenn der Wechsel von dem Einsatzmaterial auf das Folgematerial erfolgt, kann durch den motorischen Antrieb oder die federbelastete Krafteinbringung in Öffnungsrichtung der Verschluss öffnen, so dass bei der Einsatzleitung ein Leersaugen der Einsatzleitung durch die Weichenvorrichtung und die Ansaugleitung in den Vorlagebehälter möglich wird.

Ein weiterer Vorteil ist erzielbar, wenn bei einer erfindungsgemäßen Vorlagevorrichtung die Einsatzschnittstelle und/oder die Folgeschnittstelle eine spezifische Codierung aufweisen. Unter einer spezifischen Codierung ist insbesondere eine durch einen Menschen bzw. den Benutzer erfassbare Codierung zu verstehen, sofern hier Schriftzeichen, Ziffern, Farben oder auch geometrische Formen oder Kombinationen derselben eingesetzt werden. So ist es möglich, dass der Benutzer einer erfindungsgemäßen Vorlagevorrichtung eine bessere Unterscheidung zwischen der Einsatzschnittstelle und der Folgeschnittstelle durchführen kann. Sofern für den Wechsel eine maschinelle bzw. eine über die Anzeigevorrichtung geführte Führungsweise für den Benutzer vorgegeben ist, kann die Codierung für eine verbesserte Führung des Benutzers beim Umstecken der jeweiligen Sauglanze dienen.

Bei einer Ausführungsform gemäß dem voranstehenden Absatz ist es Weiter von Vorteil, wenn bei der Vorlagevorrichtung die spezifische Codierung eine Anzeigevorrichtung aufweist, zur wechselnden Anzeige spezifischer Informationen. Eine solche spezifische Codierung kann auch als aktive Codierung bezeichnet werden. Neben den beschriebenen Nummern sind jedoch auch Barcodes oder Farben oder Ähnliches in Kombination denkbar. Eine Führung des Benutzers bei der Vorbereitung des Wechsels wird auf diese Weise noch einfacher und ist insbesondere lokal auf die jeweilige Schnittstelle begrenzt.

Ebenfalls Gegenstand der vorliegenden Erfindung ist ein Verfahren für die Durchführung eines Wechsels von einer Einsatzrezeptur auf eine Folgerezeptur einer Extrusionsvorrichtung mit einer erfindungsgemäßen Vorlagevorrichtung, aufweisend die folgenden Schritte:
- Verbinden der Folgeschnittstelle mit einer Quelle für Folgematerial,
- Umschalten des Stellabschnitts der Weichenvorrichtung von der Einsatzposition auf die Folgeposition.

Durch die Verwendung einer erfindungsgemäßen Vorlagevorrichtung bringt ein erfindungsgemäßes Verfahren die gleichen Vorteile mit sich, wie sie ausführlich mit Bezug auf eine erfindungsgemäße Vorlagevorrichtung erläutert worden sind.

Ein erfindungsgemäßes Verfahren lässt sich dahingehend weiterbilden, dass vor dem Umschalten in die Folgeposition der Stellabschnitt in eine Leersaugposition gestellt wird und die Ansaugleitung durch die Ansaugung von Luft aus der Umgebung von Einsatzmaterial geleert wird. Dieses Entleeren der Ansaugleitung dient dazu, den Verschleiß und den Verschnitt bzw. die Vermischung weiter zu reduzieren. Somit ist die Ansaugleitung bei dem anschließenden Umschalten der Weichenvorrichtung in die Folgeposition leer und wird ausschließlich oder im Wesentlichen ausschließlich mit dem Folgematerial bestückt. Selbstverständlich kann auch ein Leeren bis zur entsprechenden Lanze, also bis zur Folgeschnittstelle bzw. bis zur Einsatzschnittstelle durchgeführt werden, wenn die beschriebene Leersaugöffnung direkt an der jeweiligen Schnittstelle zur Verfügung gestellt wird.

Weiter von Vorteil kann es sein, wenn bei einem erfindungsgemäßen Verfahren vor dem Umschalten des Stellabschnitts in die Folgeposition mittels Überdruck das Einsatzmaterial aus der Ansaugleitung und aus der Einsatzleitung zur Quelle des Einsatzmaterials zurückgefördert wird. Dabei handelt es sich insbesondere um eine Alternative zu dem Schritt des Leersaugens, wie er weiter oben erläutert worden ist. Ein entscheidender Vorteil hier ist es, dass quasi überhaupt kein Verlust an Einsatzmaterial erfolgt, da nicht verwendetes Einsatzmaterial, welches ansonsten möglicherweise leergesaugt oder aber in der Ansaugleitung bzw. der Einsatzleitung verbleiben würde, in die entsprechende Quelle für das Einsatzmaterial zurückgefördert wird, so dass es dort für einen späteren Verbrauch noch zur Verfügung steht.

Weiter von Vorteil kann es sein, wenn bei einem erfindungsgemäßen Verfahren das Schalten des Stellabschnitts der Weichenvorrichtung automatisch und/oder teilautomatisch durchgeführt wird. Hierbei kann eine entsprechende Kontrollvorrichtung für die Steuerung und/oder Regelung bzw. Kontrolle dieses Stellen des Stellabschnitts zur Verfügung gestellt sein. Die einzelnen notwendigen mechanischen Antriebe, zum Beispiel ein mechanischer Antrieb des Stellabschnitts und/oder ein mechanischer Antrieb entsprechender Ventile in der Weichenvorrichtung bzw. ein mechanischer bzw. automatischer Antrieb an der Leersaugöffnung direkt an den jeweiligen Schnittstellen sind dabei für die Durchführung des Verfahrens vorausgesetzt.

Ebenfalls von Vorteil ist es, wenn bei einem erfindungsgemäßen Verfahren der Schritt des Umschaltens in die Folgeposition in Abhängigkeit einer Bestätigung des Anschlusses der Folgeschnittstelle an eine Quelle für Folgematerial erfolgt. Mit anderen Worten wird nun sichergestellt, dass in manueller Weise erst nach dem Aktivieren einer Bestätigung, dass die Folgeschnittstelle auch tatsächlich an der Quelle für Folgematerial angeschlossen ist, der Schritt des Umschaltens erfolgt. Damit wird die Gefahr reduziert, dass zum einen das falsche Folgematerial noch aus einem vorhergehenden Wechsel an der Folgeschnittstelle anliegt. Als weitere Gefahr wird reduziert, dass eine Folgeschnittstelle nicht oder nur unzureichend an eine Quelle für das Folgematerial angeschlossen ist, und somit ein leeres Ansaugen erfolgen könnte. Damit bringt dieser Schritt das erfindungsgemäße Verfahren hinsichtlich Risikoreduktion und Sicherheitserhöhung weiter.

Ebenfalls Gegenstand der vorliegenden Erfindung ist eine Extrusionsvorrichtung für die Herstellung eines Extrusionsproduktes aus einer Rezeptur mit einer Vielzahl von unterschiedlichen Rezepturmaterialien, wobei für die Umstellung von einer Einsatzrezeptur auf eine Folgerezeptur für wenigstens zwei Rezepturmaterialien, insbesondere für alle Rezepturmaterialien, eine Vorlagevorrichtung gemäß der vorliegenden Erfindung vorgesehen ist. Damit bringt eine erfindungsgemäße Extrusionsvorrichtung die gleichen Vorteile mit sich, wie sie ausführlich mit Bezug auf eine erfindungsgemäße Vorlagevorrichtung erläutert worden sind. Gleichzeitig kann mit der erfindungsgemäßen Extrusionsvorrichtung das erläuterte erfindungsgemäße Verfahren durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Vorlagevorrichtung,
- Fig. 2: die Ausführungsform der Fig. 1 mit dem Stellabschnitt in Folgeposition,
- Fig. 3: eine Weiterentwicklung der Ausführungsform der Fig. 1 und 2, und
- Fig. 4: eine Ausführungsform einer erfindungsgemäßen Einsatzschnittstelle bzw. Folgeschnittstelle.

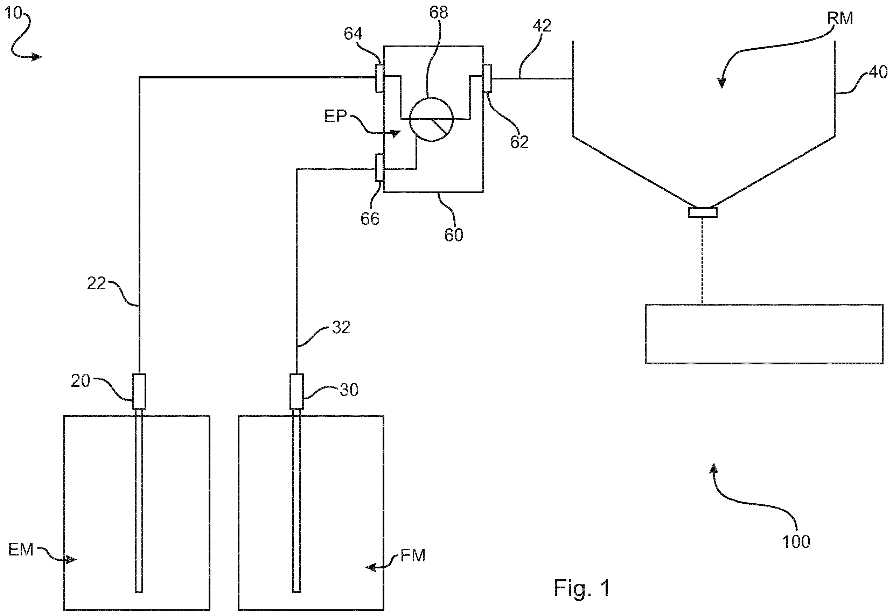

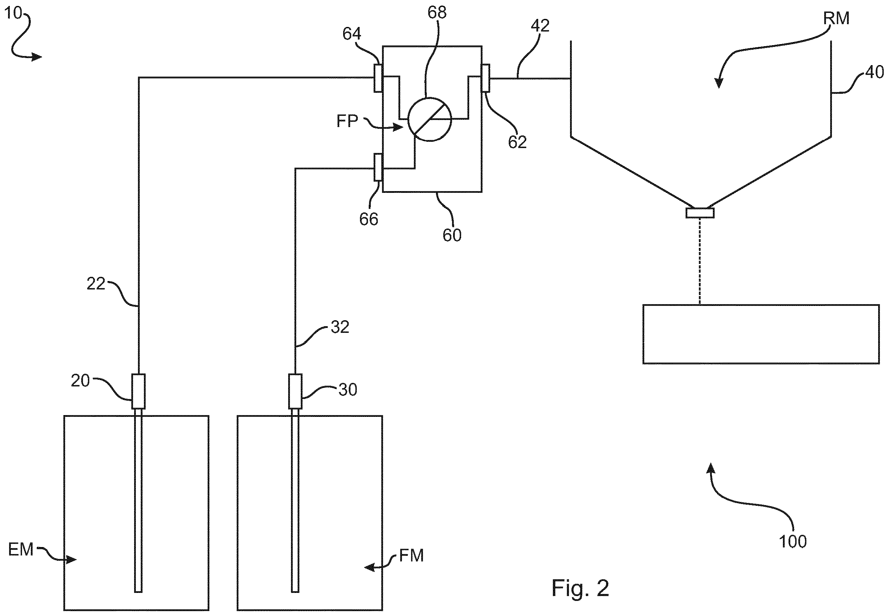

Die Fig. 1 und 2 zeigen schematisch, wie ein erfindungsgemäßes Verfahren bei der erfindungsgemäßen Vorlagevorrichtung 10 einer erfindungsgemäßen Extrusionsvorrichtung 100 durchgeführt werden kann. Dabei zeigt die Fig. 1 den normalen Betrieb bei der Herstellung und der Arbeit mit einer Einsatzrezeptur in der Extrusionsvorrichtung 100. In diesem Fall befindet sich die Einsatzschnittstelle 20 in einer hier als Container dargestellten Quelle für Einsatzmaterial EM. Über eine Einsatzleitung 22 kann nun durch Unterdruck im Vorlagebehälter 40 eine Ansaugung von Einsatzmaterial EM erfolgen. Damit das Einsatzmaterial EM auch in den Vorlagebehälter 40 als Rezepturmaterial RM eingesaugt werden kann, ist in der Weichenvorrichtung 60 der Stellabschnitt 68 derart geschaltet, dass er sich in der Einsatzposition EP befindet. Dabei kann das angesaugte Einsatzmaterial EM über den Einsatzeingang 64 über den Stellabschnitt 68 in der Einsatzposition EP an den Ausgang 62 weitergegeben werden.

Ausgehend von der Einsatzsituation, wie sie in Fig. 1 gezeigt worden ist, kann nun ein gewünschter Wechsel von der Einsatzrezeptur zur Folgerezeptur vorbereitet werden. Dieser Wechsel wird vorbereitet, indem die einzelnen Materialien hinsichtlich der gewünschten Folgematerialien FM vorbereitet werden. Die gezeigten Figuren zeigen dabei den Wechsel von einem Einsatzmaterial EM zu einem Folgematerial FM, wobei selbstverständlich in einer Rezeptur eine Vielzahl von Materialien in entsprechender Weise vorgesehen sein kann.

Um die Vorbereitung durchzuführen, wird nun der Benutzer der Vorlagevorrichtung 10 die Folgeschnittstelle 30 in eine Quelle für Folgematerial FM einstecken bzw. mit dieser verbinden. Hier ist ebenfalls ein Behälter dargestellt, in welchem sich das Folgematerial FM befindet und in welchen eine Sauglanze als Folgeschnittstelle 30 eingesaugt ist. Dies ist der Vorbereitungsschritt, welcher durch den Benutzer für alle zu ändernden Materialien vom Einsatzmaterial EM auf das Folgematerial FM durchgeführt wird. Sobald nun das Ende der Einsatzrezeptur angelangt ist, kann ein Umschalten auf die Folgerezeptur erfolgen. Dabei wird in der Weichenvorrichtung 60, insbesondere in allen Weichenvorrichtungen 60, in welchen ein Wechsel von einem Einsatzmaterial EM auf ein Folgematerial FM erfolgen soll, der Stellabschnitt 68 in seine Folgeposition FP verstellt. Hier ist es nun möglich, dass ein Folgematerial FM über die Folgeschnittstelle 30 und die Folgeleitung 32 an einen Folgeeingang 66 der Weichenvorrichtung 60 angesaugt wird. In der Folgeposition FP steht dieser Folgeeingang 66 nun über dem Stellabschnitt 68 mit dem Ausgang 62 in Verbindung, so dass das Folgematerial FM über die Ansaugleitung 42 in den Vorlagebehälter 40 eingesaugt werden kann. Zu diesem Zeitpunkt ist also die Umstellung vollständig erfolgt.

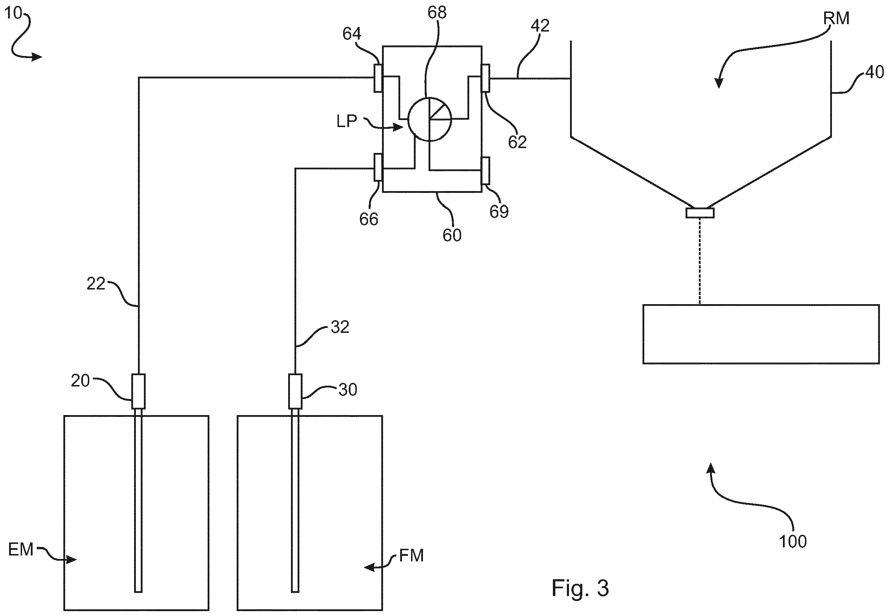

Fig. 3 zeigt, wie ein Zwischenschritt zwischen der Fig. 1 und der Fig. 2 ein Leeren der Ansaugleitung 42 ermöglichen kann. So wird nach dem Verlassen der Einsatzposition EP und vor dem Erreichen der Folgeposition FP der Stellabschnitt 68 in eine Leersaugposition LP gemäß der Fig. 3 gestellt. Bei dieser Ausführungsform weist die Weichenvorrichtung 60 noch einen Leersaugeingang 69 auf. Wird nun Unterdruck im Vorlagebehälter 40 angelegt, so führt dies dazu, dass der Stellabschnitt und vor allem auch die Ansaugleitung 42 leergesaugt werden.

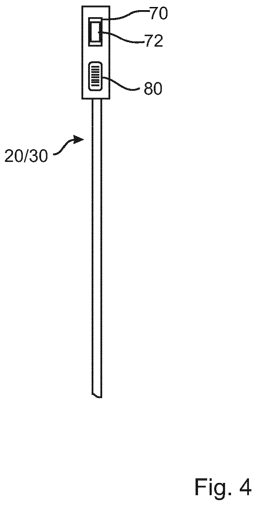

Die Fig. 4 zeigt nun, wie eine Einsatzschnittstelle 20 bzw. eine Folgeschnittstelle 30 in Form einer Sauglanze ausgebildet sein können. Hier sind weitere Bestandteile zu erkennen, zum Beispiel eine spezifische Codierung 80, welche sowohl in passiver als auch in aktiver oder teilaktiver Weise an der entsprechenden Schnittstelle 20 bzw. 30 angeordnet sein kann. Um nun auch die Einsatzleitung 22 bzw. die Folgeleitung 32 leersaugen zu können, ist bei dieser Ausführungsform gemäß der Fig. 4 eine Leersaugöffnung 70 mit einem Verschluss 72 vorgesehen. Der Verschluss 72 kann entweder durch einen motorischen Antrieb aktiv geöffnet werden oder ist federbelastet in der Öffnungsrichtung. Sobald nun das Umstellen von der Einsatzposition EP in die Folgeposition FP für den Stellabschnitt 68 durchgeführt wird, kann als Zwischenschritt ein Leersaugen nun nicht mehr nur ab der Weichenvorrichtung 60 über die Ansaugleitung 42 in den Vorlagebehälter 40 erfolgen, sondern vielmehr auch ein Leersaugen ab der jeweiligen Einsatzschnittstelle 20 bzw. Folgeschnittstelle 30.

Die voranstehende Erläuterung der Ausführungsformen beschreibt die vorliegende Erfindung ausschließlich im Rahmen von Beispielen.

### Bezugszeichenliste

- 10: Vorlagevorrichtung
- 20: Einsatzschnittstelle
- 22: Einsatzleitung
- 30: Folgeschnittstelle
- 32: Folgeleitung
- 40: Vorlagebehälter
- 42: Ansaugleitung
- 60: Weichenvorrichtung
- 62: Ausgang
- 64: Einsatzeingang
- 66: Folgeeingang
- 68: Stellabschnitt
- 69: Leersaugeingang
- 70: Leersaugöffnung
- 72: Verschluss
- 80: Codierung

- 100: Extrusionsvorrichtung

- RM: Rezepturmaterial
- EM: Einsatzmaterial
- FM: Folgematerial

- EP: Einsatzposition
- FP: Folgeposition
- LP: Leersaugposition

## Patentansprüche

1. Vorlagevorrichtung (10) für die Vorlage von Rezepturmaterial (RM) für einen Extrusionsvorgang in einer Extrusionsvorrichtung (100), aufweisend eine Einsatzschnittstelle (20) zur Ansaugung von Einsatzmaterial (EM) und eine Folgeschnittstelle (30) zur Ansaugung von Folgematerial (FM), weiter aufweisend einen Vorlagebehälter (40) zur Aufnahme von angesaugtem Einsatzmaterial (EM) und von angesaugtem Folgematerial (FM), wobei der Vorlagebehälter (40) über eine Ansaugleitung (42) mit einem Ausgang (62) einer Weichenvorrichtung (60) verbunden ist und die Weichenvorrichtung (60) mit einem Einsatzeingang (64) über eine Einsatzleitung (22) mit der Einsatzschnittstelle (20) verbunden ist und mit einem Folgeeingang (66) über eine Folgeleitung (32) mit der Folgeschnittstelle (30) verbunden ist, wobei weiter die Weichenvorrichtung (60) einen Stellabschnitt (68) aufweist, welcher zwischen einer Einsatzposition (EP), in welcher der Einsatzeingang (64) mit dem Ausgang (62) verbunden ist, und einer Folgeposition (FP), in welcher der Folgeeingang (66) mit dem Ausgang (62) verbunden ist, verstellbar ist, wobei der Stellabschnitt (68) zusätzlich in eine Leersaugposition (LP) verstellbar ist, in welcher der Ausgang (62) mit einem zur Umgebung offenen Leersaugeingang (69) verbunden ist, und/oder wobei die Einsatzschnittstelle (20) und/oder die Folgeschnittstelle (30) eine verschließbare Leersaugöffnung (70) aufweisen.

2. Vorlagevorrichtung (10) nach Anspruch 1, **dadurch gekennzeichnet, dass** die Einsatzschnittstelle (20) und/oder die Folgeschnittstelle (30) als Sauglanze ausgebildet ist.

3. Vorlagevorrichtung (10) nach einem der vorangegangenen Ansprüche, **dadurch gekennzeichnet, dass** die Ansaugleitung (42) kürzer ist als die Einsatzleitung (22) und/oder die Folgeleitung (32), insbesondere kürzer als die Hälfte der Einsatzleitung (22) und/oder die Hälfte der Folgeleitung (32).

4. Vorlagevorrichtung (10) nach einem der vorangegangenen Ansprüche, **dadurch gekennzeichnet, dass** die Leersaugöffnung (70) einen Verschluss (72) aufweist, welcher in Öffnungsrichtung federbelastet und/oder mit einem motorischen Antrieb in eine Öffnungsposition bringbar ist.

5. Vorlagevorrichtung (10) nach einem der vorangegangenen Ansprüche, **dadurch gekennzeichnet, dass** die Einsatzschnittstelle (20) und/oder die Folgeschnittstelle (30) eine spezifische Codierung (80) aufweisen.

6. Vorlagevorrichtung (10) nach Anspruch 5, **dadurch gekennzeichnet, dass** die spezifische Codierung (80) eine Anzeigevorrichtung aufweist zur wechselnden Anzeige spezifischer Informationen.

7. Verfahren für die Durchführung eines Wechsels von einer Einsatzrezeptur auf eine Folgerezeptur einer Extrusionsvorrichtung (100) mit einer Vorlagevorrichtung (10) mit den Merkmalen eines der Ansprüche 1 bis 6, aufweisend die folgenden Schritte:
- Verbinden der Folgeschnittstelle (30) mit einer Quelle für Folgematerial (FM),
- Umschalten des Stellabschnitts (68) der Weichenvorrichtung (60) von der Einsatzposition (EP) auf die Folgeposition (FP).

8. Verfahren nach Anspruch 7, **dadurch gekennzeichnet, dass** vor dem Umschalten in die Folgeposition (FP) der Stellabschnitt (68) in eine Leersaugposition (LP) gestellt wird und die Ansaugleitung (42) durch die Ansaugung von Luft aus der Umgebung von Einsatzmaterial (EM) geleert wird.

9. Verfahren nach einem der Ansprüche 7 oder 8, **dadurch gekennzeichnet, dass** vor dem Umschalten des Stellabschnitts (68) in die Folgeposition (FP) mittels Überdruck das Einsatzmaterial (EM) aus der Ansaugleitung (42) und aus der Einsatzleitung (22) zu der Quelle des Einsatzmaterials (EM) zurück gefördert wird.

10. Verfahren nach einem der Ansprüche 7 bis 9, **dadurch gekennzeichnet, dass** das Schalten des Stellabschnitts (68) der Weichenvorrichtung (60) automatisch und/oder teilautomatisch durchgeführt wird.

11. Verfahren nach einem der Ansprüche 7 bis 10, **dadurch gekennzeichnet, dass** der Schritt des Umschaltens in die Folgeposition (FP) in Abhängigkeit einer Bestätigung des Anschlusses der Folgeschnittstelle (30) an eine Quelle für Folgematerial (FM) erfolgt.

12. Extrusionsvorrichtung (100) für die Herstellung eines Extrusionsproduktes aus einer Rezeptur mit einer Vielzahl von unterschiedlichen Rezepturmaterialien (RM), wobei für die Umstellung von einer Einsatzrezeptur auf eine Folgerezeptur für wenigstens zwei Rezepturmaterialen (RM), insbesondere für alle Rezepturmaterialien (RM), eine Vorlagevorrichtung (10) mit den Merkmalen eines der Ansprüche 1 bis 6 vorgesehen ist.

## Claims

1. A feed device (10) for feeding recipe material (RM) for an extrusion process in an extrusion device (100), having a feed interface (20) for suctioning feed material (EM) and a subsequent interface (30) for suctioning subsequent material (FM), additionally having a feed container (40) for receiving suctioned feed material (EM) and suctioned subsequent material (FM), wherein the feed container (40) is connected to an outlet (62) of a switching device (60) via a suction line (42) and the switching device (60) is connected to the feed interface (20) with a feed inlet (64) via a feed line (22) and is connected to the subsequent interface (30) with a subsequent input (66) via a subsequent line (32), wherein the switching device (60) furthermore has an adjustment section (68), which can be adjusted between a feed position (EP), in which the feed inlet (64) is connected to the outlet (62), and a subsequent position (FP), in which the subsequent inlet (66) is connected to the outlet (62), wherein the adjustment section (68) can additionally be adjusted into an empty suction position (LP), in which the outlet (62) is connected to an empty suction inlet (69) open to the environment and/or wherein the feed interface (20) and/or the subsequent interface (30) have a closeable empty suction opening (70).

2. The feed device (10) according to claim 1, **characterized in that** the feed interface (20) and/or the subsequent interface (30) is designed as a suction lance.

3. The feed device (10) according to any one of the preceding claims, **characterized in that** the suction line (42) is shorter than the feed line (22) and/or the subsequent line (32)I in particular is shorter than half the feed line (22) and/or half the subsequent line (32).

4. The feed device (10) according to any one of the preceding claims, **characterized in that** the empty suction opening (70) has a closure (72), which is spring loaded in the opening direction and/or can be brought into the opening position with a motor drive.

5. The feed device (10) according to any one of the preceding claims, **characterized in that** a feed interface (20) and/or the subsequent interface (30) have a specific coding (80).

6. The feed device (10) according to claim 5, **characterized in that** the specific coding (80) has a display device for the changing display of specific information.

7. A method for making a change in a feed recipe to a subsequent recipe of an extrusion device (100) with a feed device (10) with the features of any one of claims 1 to 6, having the following steps:
- connection the subsequent interface (30) to a source for subsequent material (FM),
- switching the adjustment section (68) of the switching device (60) from the feed position (EP) to the subsequent position (FP).

8. The method according to claim 7, **characterized in that** before switching into the subsequent position (FP) the adjustment section (68) is placed in an empty suction position (LP) and the suction line (42) is emptied of feed material (EM) by suctioning air from the environment.

9. The method according to any one of claims 7 or 8, **characterized in that** before switching the adjustment section (68) into the subsequent position (FP), the feed material (EM) is conveyed from the suction line (42) and from the feed line (22) back to the source of the feed material (EM).

10. The method according to any one of claims 7 to 9, **characterized in that** the switching of the adjustment section (68) of the switching device (60) is carried out automatically and/or partially automatically.

11. The method according to any one of claims 7 to 10, **characterized in that** the step of switching into the subsequent position (FP) takes place as a function of an actuation of the connection of the subsequent interface (30) to a source for subsequent material (FM).

12. An extrusion device (100) for producing an extrusion product from a recipe with a plurality of different recipe materials (RM), wherein for the changeover from a feed recipe to a subsequent recipe for at least two recipe materials (RM), in particular for all recipe materials (RM), a feed device (10) is provided with the features of any one of claims 1 to 6.

## Revendications

1. Dispositif collecteur (10) pour la collecte d'un matériau de formulation (RM) pour un processus d'extrusion dans un dispositif d'extrusion (100), comprenant une interface d'insert (20) pour l'aspiration du matériau d'insert (EM) et une interface de suite (30) pour l'aspiration du matériau de suite (FM), comprenant en outre un récipient collecteur (40) pour le logement du matériau d'insert (EM) aspiré et du matériau de suite (FM) aspiré, dans lequel le récipient collecteur (40) est relié par l'intermédiaire d'une conduite d'aspiration (42) avec une sortie (62) d'un dispositif d'aiguillage (60) et le dispositif d'aiguillage (60) est relié avec une entrée d'insert (64) par l'intermédiaire d'une conduite d'insert (22) avec l'interface d'insert (20) et avec une entrée de suite (66) par l'intermédiaire d'une conduite de suite (32) avec l'interface de suite (30), dans lequel, en outre le dispositif d'aiguillage (60) comprend une portion de réglage (68) qui peut être réglée entre une position d'insert (EP), dans laquelle l'entrée d'insert (64) est reliée avec la sortie (62), et une position de suite (FP), dans laquelle l'entrée de suite (66) est reliée avec la sortie (62), dans lequel la portion de réglage (68) peut en outre être réglée dans une position d'aspiration à vide (LP), dans laquelle la sortie (62) est reliée avec une entrée d'aspiration à vide (69) ouverte vers l'environnement et/ou dans lequel l'interface d'insert (20) et/ou l'interface de suite (30) comprennent une ouverture d'aspiration à vide (70).

2. Dispositif collecteur (10) selon la revendication 1, **caractérisé en ce que** l'interface d'insert (20) et/ou l'interface de suite (30) est conçue comme une lance d'aspiration.

3. Dispositif collecteur (10) selon l'une des revendications précédentes, **caractérisé en ce que** la conduite d'aspiration (42) est plus courte que la conduite d'insert (22) et/ou la conduite de suite (32), plus particulièrement plus courte que la moitié de la conduite d'insert (22) et/ou la moitié de la conduite de suite (32).

4. Dispositif collecteur (10) selon l'une des revendications précédentes, **caractérisé en ce que** l'ouverture d'aspiration à vide (70) comprend une fermeture (72) qui est précontrainte par un ressort dans la direction de l'ouverture et/ou qui peut être amenée dans une position d'ouverture avec un entraînement motorisé.

5. Dispositif collecteur (10) selon l'une des revendications précédentes, **caractérisé en ce que** l'interface d'insert (20) et/ou l'interface de suite (30) comprennent un codage spécifique (80).

6. Dispositif collecteur (10) selon la revendication 5, **caractérisé en ce que** le codage spécifique (80) comprend un dispositif d'affichage pour l'affichage variable d'informations spécifiques.

7. Procédé d'exécution du remplacement d'une formulation d'insert par une formulation de suite d'un dispositif d'extrusion (100) avec un dispositif collecteur (10) présentant les caractéristiques d'une des revendications 1 à 6, comprenant les étapes suivantes :
- raccordement de l'interface de suite (30) avec une source de matériau de suite (FM),
- commutation de la portion de réglage (68) du dispositif d'aiguillage (60) de la position d'insert (EP) vers la position de suite (FP).

8. Procédé selon la revendication 7, **caractérisé en ce que**, avant la commutation dans la position de suite (FP), la portion de réglage (68) est mise dans une position d'aspiration à vide (LP) et la conduite d'aspiration (42) est vidée par l'aspiration d'air à partir de l'environnement du matériau d'insert (EM).

9. Procédé selon l'une des revendications 7 ou 8, **caractérisé en ce que**, avant la commutation de la portion de réglage (68) dans la position de suite (FP), le matériau d'insert (EM) est retourné, au moyen d'une surpression, de la conduite d'aspiration (42) et de la conduite d'insert (22) vers la source du matériau d'insert (EM).

10. Procédé selon l'une des revendications 7 à 9, **caractérisé en ce que** la commutation de la portion de réglage (68) du dispositif d'aiguillage (60) est effectuée automatiquement et/ou de manière partiellement automatique.

11. Procédé selon l'une des revendications 7 à 10, **caractérisé en ce que** l'étape de commutation dans la position de suite (FP) a lieu en fonction d'une confirmation du raccordement de l'interface de suite (30) à une source pour le matériau de suite (FM).

12. Dispositif d'extrusion (100) pour la fabrication d'un produit extrudé à partir d'une formulation avec une pluralité de matériaux de formulation (RM) différents, dans lequel, pour le passage d'une formulation d'insert à une formulation de suite pour au moins deux matériaux de formulation (RM), plus particulièrement pour tous les matériaux de formulation (RM), un dispositif collecteur (10) présentant les caractéristiques d'une des revendications 1 à 6 est prévu.
